# EUROPEAN PATENT APPLICATION

(11) **EP 4 273 883 A1**
(43) Date of publication of application: **08.11.2023**
(21) Application number: 21915934.0
(22) Date of filing: 15.12.2021
(51) Int. Cl.: G21C 9/016

(54) **SYSTEM FOR CONFINING AND COOLING MELT FROM THE CORE OF A NUCLEAR REACTOR**

(30) Priority: 29.12.2020 RU 2020143777
(71) Applicant: Joint Stock Company "Atomenergoproekt", Moscow, 107996 (RU); Science and Innovations - Nuclear Industry Scientific Development, Private Enterprise, Moscow 119017 (RU)
(72) Inventor: SIDOROV, Aleksandr Stalevich, Moscow 115612 (RU); SIDOROVA, Nadezhda Vasilievna, Moscow 11561 (RU); CHIKAN, Kristin Aleksandrovich, Moscow 111116 (RU); BADESHKO, Kseniya Konstantinovna, Volgograd 400066 (RU)
(74) Representative: Osmans, Voldemars
(86) International application number: PCT/RU2021/000575
(87) International publication number: WO 2022/146184

(57) **Abstract**

The invention relates to systems which provide for the safety of nuclear power plants, and can be used in the event of accidents leading to the destruction of the pressure vessel and sealed containment structure of a reactor. A system for confining and cooling melt from the core of a nuclear reactor comprises a guide device, a cantilever truss, a filler for receiving and distributing melt, said filler being disposed in a housing having water supply valves mounted around its perimeter and having a flange with a thermal shield mounted thereon, a drum mounted on the flange of said housing and being configured in the form of a casing with reinforcing ribs mounted around its perimeter on the inner side, said reinforcing ribs bearing against a cover and a bottom, wherein said drum has tensioning elements connecting the drum, via a support flange welded thereto, to the flange of the housing, and spacing elements. Provided in the drum are nozzles having water supply valves mounted therein with sealed covers, and hydraulic dampers connected to external sources of water and to the water supply valves by feed pipes, pressure pipes, compensating pipes and equalizing pipes, for increasing the reliability of the system for confining and cooling melt from the core of a nuclear reactor.

## Description

### Pertinent Art

The invention relates to the field of nuclear energy, in particular, to the systems ensuring safety of nuclear power plants (NPPs), and can be used in severe accidents resulting in destruction of a reactor pressure vessel and its containment.

Accidents with core meltdown that can take place in case of multiple failures of the core cooling systems pose the greatest radiation hazard.

During such accidents a core melt - corium - melts the core structures and a reactor pressure vessel and flows out beyond its boundaries, and as a consequence of the residual heat retained in it may disturb the NPP containment integrity - the last barrier on the routes for radioactive product releases to the environment.

In order to prevent this it is required to confine a core melt (corium) escaping from a reactor pressure vessel and provide its continuous cooling until its complete crystallization. This function is performed by a system for confining and cooling the melt from the core of a nuclear reactor which prevents damage to an NPP containment and thus protects the public and the environment against radiation exposure in case of any severe accidents at nuclear reactors.

Timely and ensured water supply to a multi-layered vessel for the melt cooling provided by installation of water supply valves in the upper section of the vessel intended for the melt receipt and distribution is one of the most important factors for assurance of the reliable melt cooling and confining process in case of any severe accidents. In this case the key aspect is that water supply via the installed valves shall be arranged at a certain point of time upon achievement of certain (specific) conditions, particularly: early water supply can result in a steam explosion, and impossibility of water supply can result in overheating of an equipment inside a pressure vessel under the impact of radiant heat fluxes from the melt mirror, which can finally cause the equipment collapsing into the pressure vessel, water ingress from a reactor shaft to the melt, mixing of water with melt resulting in steam explosions destroying a system for confining and cooling of melt and a containment, with release of radioactive substances to the environment.

### Prior art

A system for confining and cooling the melt [1, 2, 3] from the core of a nuclear reactor comprising a guide plate installed under the reactor pressure vessel and resting upon a cantilever truss, a multi-layered vessel installed on embedded parts in the concrete vault foundation with a flange equipped with thermal protection, and a filler consisting of a set of cassettes installed onto each other, and a service platform installed inside the vessel between the filler and the guide plate, is known.

This system has a low reliability due to the following drawbacks:
- in case of the reactor pressure vessel melt-through (destruction) by the corium, overheated melt starts flowing through the formed hole under the impact of residual pressure in the reactor pressure vessel; it is distributed non-axisymmetrically inside the multi-layered vessel volume and makes dynamic impact on the peripheral structures: the leak-tight connection zone between the multi-layered vessel and the cantilever truss, thermal protection of the multi-layered vessel flange, water supply valves located in the multi-layered vessel which causes their destruction as well as destruction of the multi-layered vessel flange and the inner surfaces of the cantilever truss washed by the melt which finally results in malfunctions of a system for confining and cooling the melt due to destruction of its components;
- in case of jet inflow of a large volume (for example, 10 to 15 m³) of overheated melt into the multi-layered vessel onto the filler a part of this melt moves backwards due to the reflective effect on the side of the filler, towards the peripheral structures - towards the leak-tight connection zone between the multi-layered vessel and the cantilever truss, towards thermal protection of the multi-layered vessel flange and towards the multi-layered vessel, particularly to the area of the water supply valves which causes their damage and destruction (weld-up), and consequently disturbance of water supply into the multi-layered vessel for the melt cooling that can result in destruction of a system for confining and cooling the melt and release of radioactive substances to the environment;
- in case of the melt outflow to the multi-layered vessel into the filler the melt volume is increased due to the filler melting, and its level inside the multi-layered vessel also increases; in this case falling of any fragments of the core and the reactor pressure vessel bottom causes generation of melt splashes (waves) that make dynamic impacts on the peripheral equipment and the water supply valves installed in the multi-layered vessel, resulting in their destruction (weld-up), and consequently disturbance of water supply into the multi-layered vessel for the melt cooling that can cause destruction of the system for confining and cooling the melt and release of radioactive substances to the external environment;
- aerosols are generated in the course of the melt outflow from the nuclear reactor pressure vessel and interaction of the melt with the filler; they move upwards from the hot zones and precipitate on the peripheral equipment and the water supply valves in the cold zones that results in their shielding with subsequent blocking of activation under the impact of thermal radiation from the melt mirror, and consequently in disturbance of water supply into the multi-layered vessel for the melt cooling that can cause destruction of the system for confining and cooling the melt and release of radioactive substances to the external environment.

### Disclosure of the invention

The technical result of the claimed invention is to enhance reliability of the system for confining and cooling the melt from the core of a nuclear reactor.

The tasks to be solved by the claimed invention include prevention of any destruction of the peripheral structures, equipment installed on the vessel flange, as well as provision of ensured cooling water supply onto the melt.

The tasks, according to the invention, are solved by a system for confining and cooling the melt from the core of a nuclear reactor, comprising a guide device, a cantilever truss, a filler for receiving and distributing melt, located inside the vessel with water supply valves installed along its periphery and a flange equipped with thermal protection additionally comprises a drum installed on the vessel flange and made in the form of a shell with reinforcing ribs installed along its periphery on the inner side, and resting on the cover and bottom, having tensioning elements connecting the drum with the vessel flange via a support flange welded to it, spacing elements, that provide an adjustment gap between the drum and the vessel flange; the drum has nozzles where water supply valves with sealed covers installed in the drum nozzles are installed, hydraulic dampers connected to the external water sources and the water supply valves of the drum with the use of feed, pressure, compensating and equalizing pipelines.

Presence of the drum installed on the vessel flange and made in the form of a shell with reinforcing ribs installed along its periphery on the inner side and resting on the cover and bottom, having tensioning elements connecting the drum with the vessel flange via a support flange welded to it, spacing elements that provide an adjustment gap between the drum and the vessel flange, and nozzles where water supply valves with sealed covers are installed in the system for confining and cooling the melt from the core of a nuclear reactor is one of the essential features of the claimed invention enabling to ensure cooling water supply from the external sources into the space inside the vessel in case of any lack of water in the reactor shaft or failure of the water supply valves installed along the vessel periphery, and consequently to provide steam and gas, steam and water or water cooling of the melt mirror and the equipment located above the melt mirror (the cantilever truss and the guide plate) due to supply of cooling water from the external sources into the vessel from the top onto the melt mirror.

Presence of hydraulic dampers connected to the external water sources and water supply valves of the drum with the use of feed, pressure, compensating and equalizing pipelines in the system for confining and cooling the melt from the core of a nuclear reactor is another essential feature of the claimed invention enabling to protect the water supply valves of the drum against the long-term impact of the boric acid solution and hydraulic shocks under the conditions of the cooling water supply by gravity from the external sources located above the said water supply valves.

### Brief description of drawings

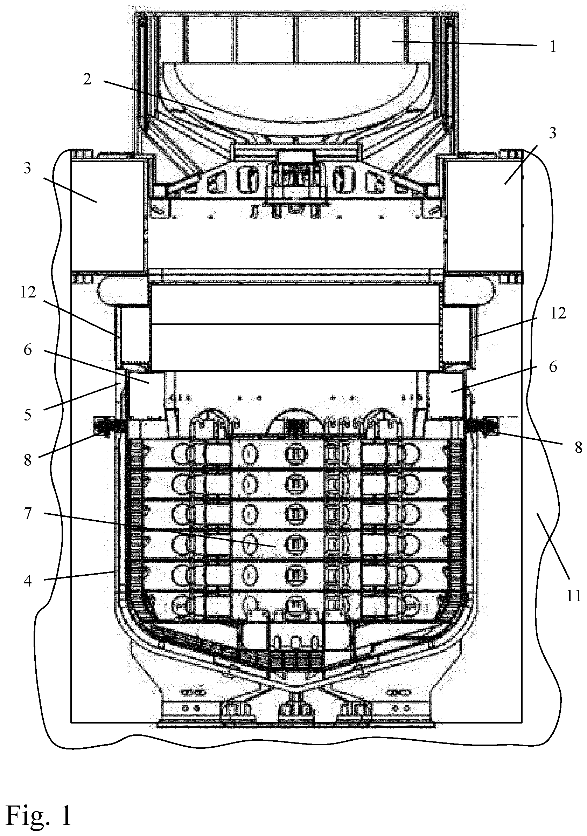

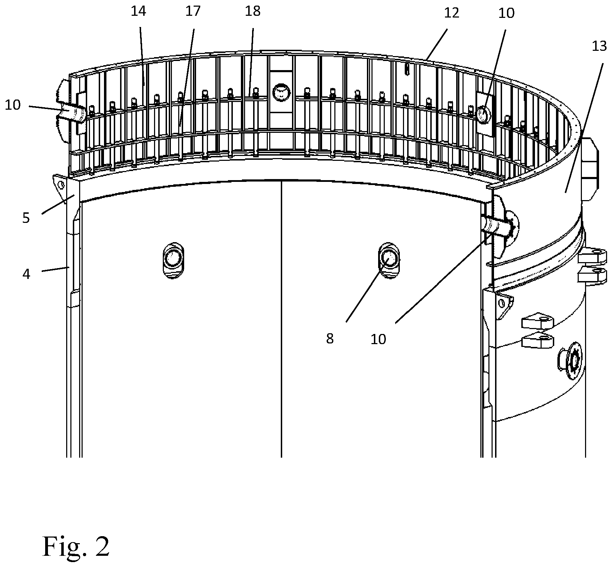

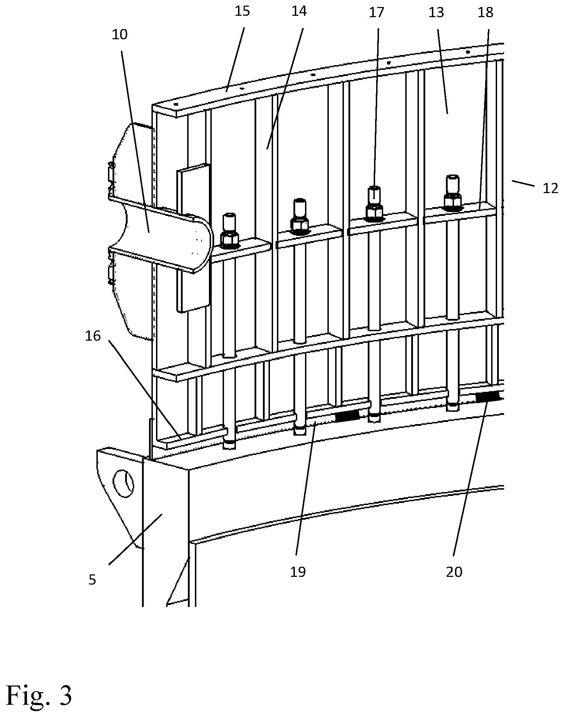

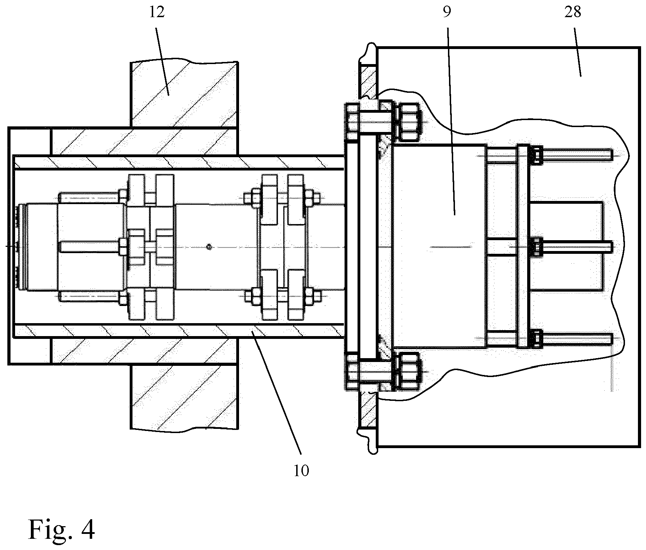

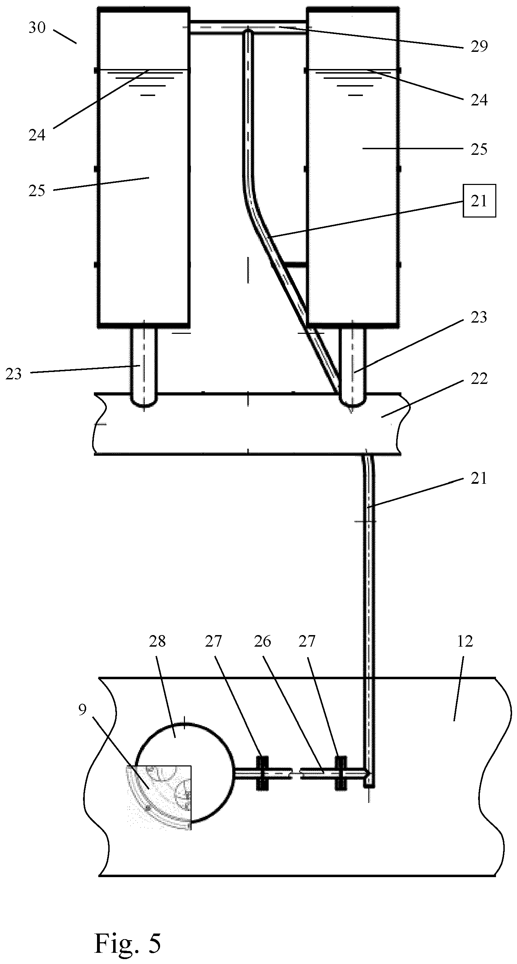

A system for confining and cooling the melt from the core of a nuclear reactor designed in accordance with the claimed invention is shown in Fig. 1.
The drum installed on the flange of the multi-layered vessel is shown in Fig. 2.
A fragment of the drum installed on the flange of the multi-layered vessel is shown in Fig. 3.
A water supply valve with a sealed cover installed in the drum is presented in Fig. 4.
Hydrostatic equipment components are shown in Fig. 5.

### Embodiments of the invention

As shown in Fig. 1-4, a system for confining and cooling of the melt from the core of a nuclear reactor comprises the guide device (1) installed under the nuclear reactor pressure vessel (2) and resting on the cantilever truss (3). A vessel (4) installed in the foundation of the reactor shaft on embedded parts is arranged under the cantilever truss (3). The vessel (4) with a filler (7) is intended for receiving and distributing melt. A flange (5) equipped with thermal protection (6) is arranged in the upper section of the vessel (4). A filler (7) is located inside the vessel (4). Water supply valves (8) are located in the area between the filler (7) and the flange (5) along the vessel (4) periphery. A drum (12) is installed on the flange (5) of the vessel (4).

As shown in Fig. 2-5, nozzles (10) where water supply valves (9) are installed are located in the drum (12). Each water supply valve (9) of the drum (12) is equipped with a sealed cover (28), wherein the water supply valves (9) are connected to hydraulic dampers (25) by means of pressure (22) and (23), equalizing (29) and supply (21) pipes, thermal expansion compensating pipes (26) installed on the flanged connections (27), ensuring cooling water supply from the external sources to the space inside the vessel (4) under the conditions with any failure of the water supply valves (8) installed along the vessel (4) periphery or low level of cooling water in the reactor shaft when the water supply valves (8) of the vessel (4) are unable to provide water overflow from the reactor shaft into the vessel (4).

The claimed system for confining and cooling the melt from the core of a nuclear reactor operates as follows.

Upon destruction of the nuclear reactor pressure vessel (2) the melt starts flowing onto the surface of the guide device (1) supported by the cantilever truss (3) under the impact of hydrostatic and residual pressure. The melt flowing down the guide device (1) enters the vessel (4) and contacts with the filler (7). In case of sectoral non-axisymmetric outflow of the melt, partial melting of thermal protections of the cantilever truss (3) and thermal protection (6) of the vessel (4) flange (5) takes place. In the course of their destruction these thermal protections reduce thermal impact of the melt on the protected equipment on the one hand, and reduce the temperature and chemical activity of the melt itself, on the other hand.

Thermal protection (6) of the vessel (4) flange (5) provides protection of its upper thick-walled internal section against thermal impact from the melt mirror from the moment of the melt inflow into the filler (7) and up to the end of the melt interaction with the filler (7), i.e. up to the starting moment of water cooling of crust located on the melt surface. Thermal protection (6) of the vessel (4) flange (5) is installed in the way to protect the inner surface of the vessel (4) above the melt level formed in the vessel (4) in the course of interaction with the filler (7), namely the upper section of the vessel (4) which is thicker than the cylindrical part of the vessel (4) providing for normal (without any critical heat flux in the pool boiling mode) heat transfer from the melt to water on the outer side of the vessel (4).

In the course of interaction between the melt and the filler (7), the thermal protection (6) of the vessel (4) flange (5) is heated and partially destroyed, while shielding the thermal radiation from the melt surface. The geometrical, thermal and physical characteristics of thermal protection (6) of the vessel (4) flange (5) are selected in the way to provide shielding of the vessel (4) flange (5) on the side of the melt mirror under any conditions, thereby independence of the protective functions from completion time of the physical and chemical interaction processes between the melt and the filler (7) is ensured. Thus, presence of the thermal protection (6) of the vessel (4) flange (5) ensures performance of protective functions prior to commencement of water supply onto the crust on the melt surface.

Protection of the water supply valves (8) of the vessel (4) is arranged in the passive way: thermal protection (6) of the vessel (4) flange (5) provides protection against any missiles in case of the reactor pressure vessel bottom (2) destruction, provides protection against any damage by the flowing melt and protection against falling of any fragments of thermal protections located above the melt mirror.

Ingress of metal and oxide components of the melt to the filler (7) located in the vessel (4) results in gradual melting of the filler (7) and formation of the free melt surface - the melt mirror - inside the vessel (4). In the course of completion of physical and chemical reactions between the metal and oxide components of the melt and the filler (7) the melt mirror temperature begins to increase due to redistribution of residual energy releases in the melt between physical and chemical reactions, heat transfer through the vessel (4), thermal radiation onto the equipment and convective heating of the gas mixture from the melt mirror.

The impact of thermal radiation on the water supply valves (8) of the vessel (4) and the water supply valves (9) of the drum (12) from the melt mirror is considerably non-uniform: the impact of this radiation on the water supply valves (8) of the vessel (4) is much more intensive than on the water supply valves (9) of the drum (12) due to different location of the above-mentioned valves (8) and (9) according to their height in relation to the melt mirror position. The water supply valves (8) of the vessel (4) are heated faster than the water supply valves (9) of the drum (12) and activated for opening much earlier.

If the water supply valves (8) of the vessel (4) are not opened that is possible, for example, due to falling of one or several fragments of the reactor pressure vessel bottom (2) into the melt bath with generation of melt waves (splashes) welding up the above-mentioned water supply valves (8), thermal radiation from the melt mirror continues to heat the water supply valves (9) of the drum (12) till the first one or two of them are activated.

As shown in Fig. 1-4, the drum (12) is installed on the vessel (4) flange (5). In terms of design the drum (12) is made in the form of a shell (13) with reinforcing ribs (14) installed along its periphery on the inner side and resting on the cover (15) and bottom (16). The drum (12) has tensioning elements (17) connecting the drum (12) with the vessel (4) flange (5) via the support flange (18) welded to it. Spacing elements (20) providing for an adjustment gap (19) between the drum (12) and the vessel (4) flange (5) are installed in the drum (12). The drum (12) has nozzles (10) where the water supply valves (9) are located providing for cooling water supply from the external sources to the space inside the vessel (4) under the conditions with any failure of the water supply nozzles (8) installed along the vessel (4) periphery.

The adjustment gap (19) enables to ensure accurate installation of the drum (12) on the vessel (4) flange (5).

As shown in Fig. 5, the water supply valves (9) are equipped with sealed covers (28) installed in the nozzles (10) of the drum (12). The water supply valves (9) of the drum (12) are connected to hydraulic dampers (25) and the external water sources with the use of feed (21), pressure (22), (23), compensating (26) and equalizing pipelines that provide cooling water supply from the external sources into the vessel (4) from the top onto the melt mirror.

In the course of the melt confining in the filler (7) integrity of certain components of equipment of the system for confining and cooling the melt from the core of a nuclear reactor can be disturbed:
- thermal protections of the cantilever truss (3) can be damaged in sectors (destroyed or melted) as a result of non-axisymmetric melt inflow;
- thermal protection (6) of the vessel (4) flange (5) can be destroyed locally in the lower section by the melt splashes, and its upper section can be destroyed in sectors as a result of non-axisymmetric melt inflow.

These destructions are possible both at the initial stage of the melt confining and at the long-term confining stage. In case of such destructions radiant and convective heat fluxes from the melt mirror begin to make considerable impact on the equipment located above the vessel (4): on the guide device (1), on the cantilever truss (3) and on the drum (12). Under these conditions heating intensity for the drum (12) located between the cantilever truss (3) and the vessel (4) will depend significantly on intensity of the thermal radiation from the melt mirror and the state of the vessel (4) water supply valves (8): in case of any liquid melt ejection (splash) or wave-like heaving upon falling of any nuclear reactor pressure vessel bottom (2) fragments into the melt inside the vessel (4) the water supply valves (8) of the vessel (4) can be welded up with the liquid melt, and their flow passages can be blocked completely. Under these conditions total failure of the water supply valves (8) of the vessel (4) to supply cooling water onto the melt mirror is possible. Heating of thermal protection (6) of the vessel (4) flange (5), thermal protections of the cantilever truss (3) and the drum (12) will continue.

The water supply valves (9) of the drum (12) are separated from the medium in the reactor shaft with the sealed covers (28) connected to the hydraulic dampers (25) via the thermal expansion compensating pipes (26), via the feed pipes (21) and the equalizing pipes (29). Borated water supplied from the external source via the pressure pipe (22) and pressure nozzles (23) enters the hydraulic dampers (25) filled with air prior to water supply. The air starts to compress under the impact of hydrostatic water head. The volume of hydraulic dampers (25) shall be selected so that the air in the hydraulic dampers (25) pushed into the equalizing pipe (29), the feed pipe (21), the compensating pipe (26) and the sealed cover (28) by water and mixing with the air in the said pipes (29), (21), (26) and (28) should create back pressure providing for the borated water level (24) in the hydraulic dampers (25) below the level of the equalizing pipe (29) location. This position of the borated water level ensures protection of the water supply valves (9) of the drum (12) against the direct impact of borated water, preventing any boric acid deposits in the above-mentioned water supply valves (9) and the related corrosion processes. During filling of the hydraulic dampers (25) with water oscillatory processes associated with different flow resistance of both water supply lines and air compression lines take place in them. For example, the pressure pipe (22) supplying borated water to the hydraulic damper (25) may have connections of hydraulic dampers (25) at different points that results in different flow resistance of the water supply line along its length. And if hydraulic dampers (25) connected to its water supply valves (9) with the pipelines (29), (21), (26) and (28) are installed on the same pressure pipe (22) at different distances fluctuation of the water level (24) takes place in the hydraulic dampers (25) in the course of water supply via the pressure pipe (22) enabling to ensure borated water overflow and fill the sealed cover (28) of the water supply valve (9) displacing the air from it. In order to prevent this phenomenon, several hydraulic dampers (25), for example, two, are installed on a water supply valve (9) of the drum (12) with tie-ins of pressure nozzles (23) at different points of the pressure pipe (22) shown in Fig. 5 connected in their upper section with the equalizing pipe (29) providing for compressed air overflow between the hydraulic dampers (25) which in conjunction with smaller diameters of the pressure nozzles (23) and the equalizing pipe (29) as compared with the diameter of the hydraulic dampers (25) ensures slowdown of oscillatory processes in them in the course of water supply, thus protecting the sealed covers (28) against ingress of borated water during initial filling of the hydraulic dampers (25).

Heating of the drum (12) is accompanied with heating of the water supply valves (9) that are activated for opening upon reaching of the preset temperature. Activation of the water supply valves (9) of the drum (12) for opening is accompanied with the air pressure release at the initial moment, and only then cooling water supply from the external sources to the space inside the vessel (4) above the melt mirror, i.e. above the filler (7) location, begins. Upon opening of the water supply valves (9) of the drum (12) water from the external source (for example, from the water storage tanks or the inspection shafts inside the containment) begins to flow into the inner space of the vessel (4) by gravity from the top onto the slag cap formed by the dissolved filler (7) components. The process of steam and water cooling of the melt surface starts.

Under the conditions when the level of cooling water on the side of the outer vessel (4) surface is considerably below the installation elevation of the water supply valves (8) of the vessel (4) hydrostatic supply of cooling water into the vessel (4) upon activation of the water supply valves (8) for opening is impossible. Under these conditions heating of the drum (12) and the water supply valves (9) installed in it will continue till activation of one or several water supply valves (9). Water supply through the water supply valves (9) of the drum (12) results in gradual decrease of the melt mirror temperature. In the course of cooling of the slag cap and the melt mirror itself the lesser and lesser amount of water supplied through the water supply valves (9) of the drum (12) will evaporate, and the greater and greater amount of water will accumulate on the slag cap surface, cooling down the entire space around. The water level above the slag cap will gradually increase, and upon reaching of the flow passage of the vessel (4) water supply valves (8) water overflow into the reactor shaft will begin via one or several water supply valves (8) of the vessel (4) activated for opening. Water supply into the reactor shaft via the water supply valves (9) of the drum (12) connected with the hydrostatic equipment provides for improvement of heat exchange in the vessel (4) and acceleration of the melt cooling process. The process of water supply into the reactor shaft will continue till equalization of the water levels in the reactor shaft and inside the vessel (4), and upon reaching of the common level the total water level will increase in the course of water supply into the vessel (4) providing for efficient cooling and stabilization of the melt.

Therefore, application of the drum with water supply valves equipped with sealed covers connected to the hydrostatic equipment by pipelines in the system for confining and cooling the melt from the core of a nuclear reactor enabled to enhance its reliability through disposition of the water supply valves at different levels, to provide cooling of the melt mirror in case of insufficient cooling water level in the reactor shaft, to prevent simultaneous failures of the water supply valves located at different levels under any beyond-design impacts of steam explosions, melt splashes, radiant heat fluxes, mechanical impacts on the equipment of the system for confining and cooling the melt from the core of a nuclear reactor.

Sources of information:
1. Russian Patent No. 2576517, IPC G21C 9/016, priority dated 16.12.2014;
2. Russian Patent No. 2576516, IPC G21C 9/016, priority dated 16.12.2014;
3. Russian Patent No. 2575878, IPC G21C 9/016, priority dated 16.12.2014.

## Claims

1. A system for confining and cooling the melt from the core of a nuclear reactor comprising a guide device, a cantilever truss, a filler for receiving and distributing melt located inside the vessel with water supply valves installed along its periphery, and thermal protection installed on the flange, **characterized in that** it additionally comprises a drum installed on the vessel flange and arranged in the form of a shell with reinforcing ribs installed along its periphery on the inner side and resting on the cover and bottom, having tension elements connecting the drum with the vessel flange via a support flange welded to it, spacing elements that provide an adjustment gap between the drum and the vessel flange, and the drum has nozzles where water supply valves with sealed covers installed in the drum nozzles are installed, hydraulic dampers connected to the external water sources and the water supply valves of the drum with the use of feed, pressure, compensating and equalizing pipelines.
